# EUROPÄISCHE PATENTSCHRIFT

(11) **EP 1 947 216 B1**
(45) Veröffentlichungstag und Bekanntmachung des Hinweises auf die Patenterteilung: **01.07.2015**
(21) Anmeldenummer: 08150168.6
(22) Anmeldetag: 11.01.2008
(51) Int. Cl.: C23C 28/00, B08B 3/00, C04B 41/00, C04B 41/50, C04B 41/53, C04B 41/85, C04B 41/91, F01D 5/28

(54) **Verfahren zur Verlängerung der zyklischen Lebensdauer von Wärmedämmschichten,insbesondere auf Bauteilen von Gasturbinen**
Method for elongating the cyclical lifespan of heat attenuation layers, in particular on gas turbine components
Procédé destiné à l'augmentation de la durée de vie cyclique de couches d'isolation thermique, en particulier sur des composants de turbines à gaz

(30) Priorität: 16.01.2007 CH 61072007
(43) Veröffentlichungstag der Anmeldung: 23.07.2008
(73) Patentinhaber: ALSTOM Technology Ltd, 5400 Baden (CH)
(72) Erfinder: Szücs, Frigyes, 4438 Langenbruck (CH); Stankowski, Alexander, 5301 Siggenthal-Station (CH)
(74) Vertreter: Alstom Technology Ltd

(56) Entgegenhaltungen:
- EP-A- 1 295 965
- WO-A1-00/48751
- US-A- 3 676 963
- US-A- 4 889 589
- US-A- 5 614 054
- US-A1- 2004 247 789
- US-A1- 2005 158 590
- H.D. STEFFENS, Z. BABIAK, ET AL: "SOME ASPECTS OF THICK THERMAL BARRIER COATING LIFE PROLONGATION" JOURNAL OF THERMAL SPRAY TECHNOLOGY, Bd. 4, Nr. 4, 1. Dezember 1999 (1999-12-01), Seiten 517-522, XP002503760
- SARUHAN ET AL: "Liquid-phase-infiltration of EB-PVD-TBCs with ageing inhibitor" JOURNAL OF THE EUROPEAN CERAMIC SOCIETY, ELSEVIER SCIENCE PUBLISHERS, BARKING, ESSEX, GB, Bd. 26, Nr. 1-2, 1. Januar 2006 (2006-01-01), Seiten 49-58, XP005123975 ISSN: 0955-2219
- MIGLIETTI W ET AL: "Advantages of fluoride ion cleaning at sub-atmospheric pressure" ENGINEERING FAILURE ANALYSIS, PERGAMON, Bd. 5, Nr. 2, 1. Juni 1998 (1998-06-01), Seiten 149-169, XP002402336 ISSN: 1350-6307

## Beschreibung

### TECHNISCHES GEBIET

Die vorliegende Erfindung bezieht sich auf das Gebiet der thermischen Maschinen. Sie betrifft ein Verfahren zur Verlängerung der zyklischen Lebensdauer von Wärmedämmschichten gemäss dem Oberbegriff des Anspruchs 1.

### STAND DER TECHNIK

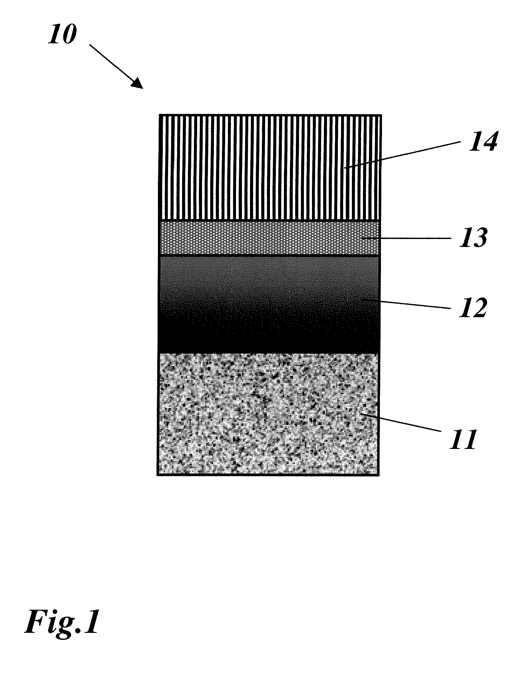

Bei thermisch belasteten Bauteilen von Gasturbinen wie z.B. Leit- oder Laufschaufeln oder Linern in der Brennkammer werden zur Erreichung hoher Betriebstemperaturen und damit verbesserter Wirkungsgrade häufig Ni-basierte Superlegierungen eingesetzt, deren Oberflächen zusätzlich durch Aufbringen einer keramischen Wärmedämmschicht geschützt werden. Der beispielhafte Aufbau eines solchen Bauteils in Form einer Turbinenschaufel ist ausschnittweise in Fig. 1 wiedergegeben. Auf dem Substrat 11 aus einer Ni-Basis-Superlegierung ist eine Haftschicht (BC) 12, z.B. aus MCrAlY oder PtAl aufgebracht. Auf die Haftschicht 12 wird die eigentliche Wärmedämmschicht (TBC) 14 aufgebracht. An der Grenzschicht zwischen Wärmedämmschicht 14 und Haftschicht 12 bildet sich bei hohen Temperaturen eine thermisch gewachsene Oxidschicht (TGO) 13 aus vorwiegend α-Al₂O₃ aus, welche die Oxidation der Haftschicht verlangsamt.

Die Lebensdauer der Wärmedämmschicht 14 unter zyklischer Oxidation hängt neben der Dicke der thermisch gewachsenen Oxidsschicht 13 (wegen steigender Spannungen am Interface mit zunehmender Oxidation), auch mit der Dehnungstoleranz der Wärmedämmschicht 14 zusammen. Begrenzt wird die Lebensdauer insbesondere durch Delamination vom Substrat 11.

Das mechanische Verhalten der Wärmedämmschicht 14 wird dabei durch verschiedene Mechanismen bestimmt:

### Treibende Kräfte der TBC-Delamination sind die folgenden zwei:

A1: transiente Dehnungen ε1 beim Thermoschock (Temperaturgradienten z.B. beim Hoch- und Abfahren einer Gasturbine) und
A2: stationäre Mismatch-Dehnungen ε2 (Mismatch der thermischen Ausdehnung benachbarter Schichten z.B. beim stationären Gasturbinenbetrieb)
A3: intrinsische Dehnungen ε3 durch TGO-Wachstum an der Grenzfläche TBC/BC (Oxidationsrate der Haftschicht 12)
A4: weitere Dehnungskomponenten (z.B. mechanische) sind zwar vorhanden, jedoch für den Einsatz beschichteter Teile in Gasturbinen weitgehend vernachlässigbar.

Aus den lokalen Dehnungen A1-A4 folgt für die lokale Spannung σ_{TBC} im TBC:
A5: σ_{TBC} = E_{TBC} ∑ εi, mit i = 1...4; E_{TBC}: makroskopischer E-Modul des TBC

Die treibenden Kräfte der TBC-Delamination sind teilweise betriebszeitunabhängig (Komponente A1, A2, A4) und teilweise betriebszeitabhängig (Komponente A3).

### Widerstand gegen TBC-Delamination:

Gemäss der Theorie der linearen Bruchmechanik kommt es zum Versagen der Wärmedämmschicht, sobald die Energiefreisetzungsrate G einen kritischen Wert G_{c} erreicht, wobei gilt:
B1: G>= G_{c} = π (σ_{TBC})² a / E_{TBC} = (K_{IC})² / E_{TBC} mit kritischer Risslänge a,
Bruchzähigkeit des TBC K_{IC} und σ_{TBC} gemäss A5.
(Quelle: Anderson, T. L.; Fracture Mechanics; 1994; ISBN 0-8493-4260-0; p.16)

Die Wärmedämmschicht versagt also (schematisch), sobald die lokale Spannung σ_{TBC} (A5) einen kritischen Wert übersteigt, welcher durch B1 definiert ist. Eine hohe Bruchzähigkeit und ein niedriger E-Modul des TBC wirken demnach lebensdauerverlängernd. Der E-Modul der Wärmedämmschicht jedoch steigt aufgrund von Sintervorgängen während der Betriebszeit an. Häufig stellt dieser Verlust der Dehnungstoleranz dem eigentlich lebensdauerlimitierenden Faktor für die Wärmedämmschicht dar.

Demgegenüber sind aus dem Stand der Technik, z.B. aus den Dokumenten US 5 614 054 A und US 4 889 589 A, verschiedene Verfahren bekannt, bei denen mit Hilfe von fluorhaltigen Gasen keramische Wärmedämmschichten von der Oberfläche eines metallischen Substrates komplett entfernt werden.

Der Erfindung liegt die Überlegung zugrunde, dass die TBC-Dehnungstoleranz im Wesentlichen durch sogenannte Mikrokontakte in der Wärmedämmschicht 14 (TBC) beeinflusst wird. Diese punktförmigen Kontaktstellen im TBC überbrücken Mikrorissflanken und übertragen dort die Spannungen. Schwächt man diese Mikrokontakte, so wird die Kohäsion des TBC herabgesetzt und das TBC wird dehnungstoleranter, der makroskopische E- Modul sinkt. Werden die Mikrokontakte gestärkt, was durch Sintervorgänge geschieht, versteift sich das TBC und bei gleicher Zwangsdehnung (A1,..,A4) steigen die lokalen Spannungen (A5), bis die kritische Energiefreisetzungsrate B1 erreicht wird und das TBC abplatzt. Dies ist insbesondere dann kritisch, wenn die fortschreitenden Sintervorgänge durch oxidische Verunreinigungen im TBC beschleunigt werden (siehe dazu z.B.: Doktorarbeit F. Szücs; Thermomechanische Analyse und Modellierung plasmagespritzter und EB-PVD aufgedampfter Wärmedämmschichtsysteme für Gasturbinen, VDI Fortschrittsberichte, Reihe 5, Nr. 518, VDI Verlag GmbH Düsseldorf, Deutschland, ISBN 3-18351805-8).

Ein relativ zu nicht nachbehandelten Wärmedämmschichten verringerter makroskopischer E-Modul von plasmagespritzten Wärmedämmschichten, die nachträglich in wässriger Flusssäure infiltriert wurden, ist in der o.g. Doktorarbeit von F. Szücs beschrieben. Die TBC-Dehnungstoleranz und zyklische Lebensdauer des Beschichtungssystems konnte dadurch nachgewiesenerweise erhöht werden.

### DARSTELLUNG DER ERFINDUNG

Es ist nun Aufgabe der Erfindung, ein Verfahren anzugeben, mit dem auf einfache Weise die zyklische Lebensdauer der Wärmedämmschichten auf z.B. Gasturbinenschaufeln und anderen Bauteilen des Heissgaspfades verlängert werden kann.

Die Aufgabe wird durch die Gesamtheit der Merkmale des Anspruchs 1 gelöst. Wesentlich für die Erfindung ist die Vergrösserung und/oder Langzeitstabilisierung der Dehnungstoleranz der Wärmedämmschicht., wobeizur Vergrösserung der Dehnungstoleranz der Wärmedämmschicht punktförmige Kontaktstellen bzw. Mikrokontakte, welche in der Wärmedämmschicht vorhandene Mikrorissflanken überbrücken, geschwächt werden.

Insbesondere werden zur Schwächung der Mikrokontakte das an der inneren Oberfläche der offenporigen Wärmedämmschicht als Verunreinigung vorhandene SiO₂ sowie weitere vorhandene sinteraktive oxidische Verunreinigungen zersetzt.

Vorzugsweise erfolgt dabei die Zersetzung des SiO₂ und der weiteren vorhandenen sinteraktiven oxidischen Verunreinigungen auf chemischem Wege.

Gemäss einer ersten Alternative erfolgt die chemische Zersetzung des SiO₂ und der weiteren vorhandenen sinteraktiven oxidischen Verunreinigungen in der HF enthaltenden Gasphase einer Fluorid-Ionen-Reinigungsanlage.

Gemäss einer zweiten Alternative erfolgt die chemische Zersetzung des SiO₂ und der weiteren vorhandenen sinteraktiven oxidischen Verunreinigungen mittels einer dampfförmigen Flusssäurelösung, insbesondere in einem Autoklaven.

Gemäss einer dritten Alternative erfolgt die chemische Zersetzung des SiO₂ und der weiteren vorhandenen sinteraktiven oxidischen Verunreinigungen mittels einer wässrigen Flusssäurelösung in einem chemischen Bad.

Insbesondere wird der Fluorid-Ionen-Reinigungsprozess mittels der Parameter Partialdruck, HF-Gasanteil, Temperatur und zeitlichem Verlauf so gesteuert, dass nur die Mikrokontakte selektiv geschwächt werden.

Zur Schwächung der Mikrokontakte kann aber auch ein Kugelstrahlverfahren eingesetzt werden.

Oder es wird zur Schwächung der Mikrokontakte ein Trovalisierverfahren eingesetzt.

Oder es wird zur Schwächung der Mikrokontakte ein Infiltrationsverfahren mit einem Medium eingesetzt, gefolgt von einer Wärmebehandlung, wobei das infiltrierte Medium bei einem Phasenübergang flüssig-fest eine Volumenexpansion durchläuft.

Eine Weiterbildung dieser Variante ist dadurch gekennzeichnet, dass das Infiltrationsmedium Wasser ist, welches durch Tauchen, Spritzen oder über die Gasphase in die Poren der Wärmedämmschicht eingebracht wird und kurzzeitig mittels flüssigem Stickstoff oder Trockeneis zum Gefrieren gebracht wird, und dass anschliessend eine Entfernung des Infiltrationsmittels durch übliche Trocknung oder mittels Vakuum-Trocknung erfolgt.

Bevorzugt wird dabei die Eindringtiefe des Infiltrationsmediums durch geeignete Prozessparameter begrenzt auf den aussenliegenden Schichtbereich der Wärmedämmschicht, um Risiken bezüglich einer negativen Auswirkung des Verfahrens auf die Adhäsion der Wärmedämmschicht zu minimieren.

Auch kann dass die räumliche Ausbreitung des Gefriervorganges gesteuert werden, indem die Wärme gerichtet ins Bauteilinnere abgeführt wird, so dass die Erstarrungsfront von der Grenzfläche der Wärmedämmschicht aus in Richtung der Oberfläche der Wärmedämmschicht geführt wird, anstatt die Porosität vor Abschluss der Erstarrung frühzeitig von aussen zu verschliessen, und die Risiken bezüglich einer negativen Auswirkung des Verfahrens auf die Adhäsion der Wärmedämmschicht minimiert werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigt
- Fig. 1: in einer schematisierten Darstellung einen Ausschnitt aus einem beispielhaften Oberflächenaufbau einer Gasturbinenschaufel mit Wärmedämmschicht.

### WEGE ZUR AUSFÜHRUNG DER ERFINDUNG

Wie bereits erwähnt, soll im Rahmen der Erfindung die Wärmedämmschicht 14 (das TBC) dehnungstoleranter gemacht und ein Versintern des TBCs im Betrieb minimiert werden, ohne die Adhäsion der Schicht negativ zu beeinflussen. Dadurch kann die zyklische Lebensdauer der Wärmedämmschicht verlängert werden. Eine höhere Zyklenzahl bei gleicher Betriebstemperatur oder eine höhere Betriebstemperatur bei gleicher Zyklenzahl ist damit realisierbar.

Die TBC-Dehnungstoleranz wird dabei im Wesentlichen durch sogenannte Mikrokontakte in der Wärmedämmschicht 14 beeinflusst. Da die Wärmedämmschicht eine offenporige Struktur aufweist, sind die Mikrokontakte gas- bzw. flüssigkeitszugänglich. Dies wird im Rahmen der Erfindung ausgenutzt, um mit chemischen, mechanischen und physikalischen Methoden die Mikrokontakte anzugreifen und zu schwächen. Mittels folgender Methoden lassen sich die Mikrokontakte im TBC angreifen:
a. Mittels HF-Gasphase in einer Fluorid-Ionen-Reinigungsanlage (FIC). Eine derartige Anlage und die damit durchführbaren Verfahren sind beispielsweise in der US-A1-2002/157277 offenbart.
b. Mittels dampfförmiger Flusssäurelösung z.B. in einem Autoklaven.
c. Mittels wässriger Flusssäurelösung in einem chemischen Bad.
d. Mittels mildem Kugelstrahlen der TBC-beschichteten Fläche, gegebenenfalls in Kombination mit einer Glättung des TBC
e. Mittels Trovalisieren in Kombination mit einer Glättung des TBC
f. Mittels Infiltration einer Flüssigkeit, welche beim Erstarren aufgrund einer Volumenexpansion die Mikrokontakte schwächt.

Dabei ist der jeweilige Prozess so zu wählen, dass:
- das TGO 13 nicht angegriffen wird- und die Adhäsion zur Haftschicht 12 gleich bleibt;
- selektiv das an der inneren Oberfläche des TBC als Verunreinigung vorhandene Si02 sowie weitere oxidische Verunreinigungen zersetzt werden, welche an der fortschreitenden Versinterung massgeblich beteiligt sind;
- eine Destabilisierung des teilstabilisierten Y₂O₃-ZrO₂-Kristalls (bulk) vermieden wird
- die TBC-Schichtdicke weitgehend unverändert bleibt; und
- eine Beschädigung von nicht TBC-beschichteten Bereichen (Schaufelinneres und Bereiche mitmetallischer Schutzschicht) vermieden wird.

Die Erfindung ist allgemein anwendbar in Bereichen, in denen das TBC frühzeitig abplatzt und sich dies Lebensdauer-limitierend auswirkt oder sich während der Reparatur /Rekonditionierung die Ausfall-Rate bzw. die Reparatur- bzw. Rekonditionierungskosten durch frühzeitiges TBC-Abplatzen erhöhen. Ein solches Abplatzen tritt erfahrungsgemäss vor allem bei Lauf- oder Leitschaufeln der ersten oder zweiten Reihe einer Gasturbine sowie bei Eintrittssegmenten oder Einlaufsegmenten von Silo-Brennkammern auf.

Insbesondere interessant ist die Erfindung für die Entwicklung von Nachrüstlösungen, bei denen ohne Änderung des Bauteil-Gusses eine Lebensdauerverlängerung erreicht werden soll, und die Optimierung der Beschichtung bereits ausgereizt ist.

### BEZUGSZEICHENLISTE

- 10: Turbinenschaufel
- 11: Substrat (z.B. Ni-Basis-Superlegierung)
- 12: Haftschicht (Bond Coat BC)
- 13: thermisch gewachsene Oxidschicht (Thermally Grown Oxide TGO)
- 14: Wärmedämmschicht (Thermal Barrier Coating TBC)

## Patentansprüche

1. Verfahren zur Verlängerung der zyklischen Lebensdauer von Wärmedämmschichten (14) aus Yttrium-stabilisiertem Zirkonia (YSZ) oder verwandter chemischer Zusammensetzungen, die unter Zwischenschaltung einer oxidierenden Haftschicht (12) auf einem Substrat (11) aufgebracht sind, **dadurch gekennzeichnet, dass** die Dehnungstoleranz der Wärmedämmschicht (14) vergrössert und/oder langzeitstabilisiert wird, wobei zur Vergrösserung der Dehnungstoleranz der Wärmedämmschicht (14) punktförmige Kontaktstellen bzw. Mikrokontakte, welche in der Wärmedämmschicht (14) vorhandene Mikrorissflanken überbrücken, geschwächt werden.

2. Verfahren nach Anspruch 1, **dadurch gekennzeichnet, dass** zur Schwächung der Mikrokontakte das an der inneren Oberfläche der offenporigen Wärmedämmschicht (14) als Verunreinigung vorhandene SiO₂ sowie weitere vorhandene sinteraktive oxidische Verunreinigungen zersetzt werden.

3. Verfahren nach Anspruch 2, **dadurch gekennzeichnet, dass** die Zersetzung des SiO₂ und der weiteren vorhandenen sinteraktiven oxidischen Verunreinigungen auf chemischem Wege erfolgt.

4. Verfahren nach Anspruch 3, **dadurch gekennzeichnet, dass** die chemische Zersetzung des SiO₂ und der weiteren vorhandenen sinteraktiven oxidischen Verunreinigungen in der HF enthaltenden Gasphase einer FluoridIonen-Reinigungsanlage erfolgt.

5. Verfahren nach Anspruch 3, **dadurch gekennzeichnet, dass** die chemische Zersetzung des SiO₂ und der weiteren vorhandenen sinteraktiven oxidischen Verunreinigungen mittels einer dampfförmigen Flusssäurelösung in einem Autoklaven erfolgt.

6. Verfahren nach Anspruch 3, **dadurch gekennzeichnet, dass** die chemische Zersetzung des SiO₂ und der weiteren vorhandenen sinteraktiven oxidischen Verunreinigungen mittels einer wässrigen Flusssäurelösung in einem chemischen Bad erfolgt.

7. Verfahren nach Anspruch 4, **dadurch gekennzeichnet, dass** der FluoridIonen-Reinigungsprozess mittels der Parameter Partialdruck, HF-Gasanteil, Temperatur und zeitlichem Verlauf so gesteuert wird, dass nur die Mikrokontakte selektiv geschwächt werden.

8. Verfahren nach Anspruch 1, **dadurch gekennzeichnet, dass** zur Schwächung der Mikrokontakte ein Kugelstrahlverfahren eingesetzt wird.

9. Verfahren nach Anspruch 1, **dadurch gekennzeichnet, dass** zur Schwächung der Mikrokontakte ein Trovalisierverfahren eingesetzt wird.

10. Verfahren nach Anspruch 1, **dadurch gekennzeichnet, dass** zur Schwächung der Mikrokontakte ein Infiltrationsverfahren mit einem Medium eingesetzt wird, gefolgt von einer Wärmebehandlung, wobei das infiltrierte Medium bei einem Phasenübergang flüssig-fest eine Volumenexpansion durchläuft.

11. Verfahren nach Anspruch 10, **dadurch gekennzeichnet, dass** das Infiltrationsmedium Wasser ist, welches durch Tauchen, Spritzen oder über die Gasphase in die Poren der Wärmedämmschicht eingebracht wird und kurzzeitig mittels flüssigem Stickstoff oder Trockeneis zum Gefrieren gebracht wird, und dass anschliessend eine Entfernung des Infiltrationsmittels durch übliche Trocknung oder mittels Vakuum-Trocknung erfolgt.

12. Verfahren nach Anspruch 10 oder 11, **dadurch gekennzeichnet, dass** die Eindringtiefe des Infiltrationsmediums durch geeignete Prozessparameter begrenzt wird auf den aussenliegenden Schichtbereich der Wärmedämmschicht, um Risiken bezüglich einer negativen Auswirkung des Verfahrens auf die Adhäsion der Wärmedämmschicht (14) zu minimieren.

13. Verfahren nach Anspruch 11, **dadurch gekennzeichnet, dass** die räumliche Ausbreitung des Gefriervorganges gesteuert wird, indem die Wärme gerichtet ins Bauteilinnere abgeführt wird, so dass die Erstarrungsfront von der Grenzfläche der Wärmedämmschicht (14) aus in Richtung der Oberfläche der Wärmedämmschicht (14) geführt wird, anstatt die Porosität vor Abschluss der Erstarrung frühzeitig von aussen zu verschliessen, und die Risiken bezüglich einer negativen Auswirkung des Verfahrens auf die Adhäsion der Wärmedämmschicht (14) minimiert werden.

## Claims

1. Process for extending the cyclic service life of thermal barrier coatings (14) made from yttriumstabilized zirconia (YSZ) or related chemical compositions, which have been applied to a substrate (11) with an oxidizing bond coat (12) in between, **characterized in that** the strain tolerance of the thermal barrier coating (14) is increased and/or longterm stabilized, wherein to increase the strain tolerance of the thermal barrier coating (14) punctiform contact locations or microcontacts, which bridge microcrack flanks in the thermal barrier coating (14), are weakened.

2. Process according to Claim 1, **characterized in that** to weaken the microcontacts the SiO₂ that is present as an impurity at the inner surface of the open-pore thermal barrier coating (14), as well as further sinter-active oxidic impurities that are present, are decomposed.

3. Process according to Claim 2, **characterized in that** the decomposition of the SiO₂ and of the further sinter-active oxidic impurities that are present is effected chemically.

4. Process according to Claim 3, **characterized in that** the chemical decomposition of the SiO₂ and of the further sinter-active oxidic impurities that are present takes place in the HF-containing gas phase of a fluoride ion cleaning installation.

5. Process according to Claim 3, **characterized in that** the chemical decomposition of the SiO₂ and of the further sinter-active oxidic impurities that are present is effected by means of a hydrofluoric acid solution in vapor form in an autoclave.

6. Process according to Claim 3, **characterized in that** the chemical decomposition of the SiO₂ and of the further sinter-active oxidic impurities that are present is effected by means of an aqueous hydrofluoric acid solution in a chemical bath.

7. Process according to Claim 4, **characterized in that** the fluoride ion cleaning process is controlled, by means of the parameters partial pressure, HF gas content, temperature and time profile, in such a way that only the microcontacts are selectively weakened.

8. Process according to Claim 1, **characterized in that** a shot-peening process is used to weaken the microcontacts.

9. Process according to Claim 1, **characterized in that** a Trowal process is used to weaken the microcontacts.

10. Process according to Claim 1, **characterized in that** an infiltration process using a medium, followed by a heat treatment, wherein the infiltrated medium undergoes a volumetric expansion during a liquid-solid phase change, is used to weaken the microcontacts.

11. Process according to Claim 10, **characterized in that** the infiltration medium is water, which is introduced into the pores in the thermal barrier coating by immersion, spraying or via the gas phase and is briefly frozen by means of liquid nitrogen or dry ice, and **in that** the infiltration agent is then removed by standard drying or by means of vacuum drying.

12. Process according to Claim 10 or 11, **characterized in that** the penetration depth of the infiltration medium is restricted by suitable process parameters to the outer region of the thermal barrier coating, in order to minimize risks of the process having a negative effect on the adhesion of the thermal barrier coating (14).

13. Process according to Claim 11, **characterized in that** the spatial propagation of the freezing operation is controlled by targeted dissipation of the heat into the component interior, so that the solidification front, starting from the interface of the thermal barrier coating (14), is guided in the direction of the surface of the thermal barrier coating (14), instead of prematurely closing off the porosity from the outside before the solidification has ended and the risks of the process having a negative effect on the adhesion of the thermal barrier coating (14) are minimized.

## Revendications

1. Procédé destiné à prolonger la durée de vie cyclique de couches d'isolation thermique (14) en zircone stabilisée à l'yttrium (YSZ) ou en compositions chimiques apparentées, qui sont déposées sur un substrat (11) avec interposition d'une couche d'accrochage oxydante (12), **caractérisé en ce que** l'on augmente et/ou on stabilise à long terme la tolérance de dilatation de la couche d'isolation thermique (14), dans lequel, pour augmenter la tolérance de dilatation de la couche d'isolation thermique (14), on affaiblit des zones de contact ponctuelles ou des microcontacts, qui joignent des flancs de microfissures présentes dans la couche d'isolation thermique (14).

2. Procédé selon la revendication 1, **caractérisé en ce que**, pour l'affaiblissement des microcontacts, on décompose le SiO₂ présent comme impureté à la surface intérieure de la couche d'isolation thermique (14) à cellules ouvertes ainsi que d'autres impuretés oxydées actives par frittage présentes.

3. Procédé selon la revendication 2, **caractérisé en ce que** l'on effectue la décomposition du SiO₂ et des autres impuretés oxydées actives par frittage présentes par voie chimique.

4. Procédé selon la revendication 3, **caractérisé en ce que** l'on effectue la décomposition chimique du SiO₂ et des autres impuretés oxydées actives par frittage présentes dans la phase gazeuse contenant de l'HF d'une installation d'épuration d'ions fluorure.

5. Procédé selon la revendication 3, **caractérisé en ce que** l'on effectue la décomposition chimique du SiO₂ et des autres impuretés oxydées actives par frittage présentes au moyen d'une solution d'acide fluorhydrique sous forme de vapeur dans un autoclave.

6. Procédé selon la revendication 3, **caractérisé en ce que** l'on effectue la décomposition chimique du SiO₂ et des autres impuretés oxydées actives par frittage présentes au moyen d'une solution aqueuse d'acide fluorhydrique dans un bain chimique.

7. Procédé selon la revendication 4, **caractérisé en ce que** l'on conduit le processus d'épuration d'ions fluorure au moyen des paramètres pression partielle, proportion de HF gazeux, température et évolution temporelle, de telle manière que seuls les microcontacts soient affaiblis de façon sélective.

8. Procédé selon la revendication 1, **caractérisé en ce que** l'on utilise un procédé de grenaillage pour l'affaiblissement des microcontacts.

9. Procédé selon la revendication 1, **caractérisé en ce que** l'on utilise un procédé de tribofinition pour l'affaiblissement des microcontacts.

10. Procédé selon la revendication 1, **caractérisé en ce que** l'on utilise, pour l'affaiblissement des microcontacts, un procédé d'infiltration avec un fluide, suivi d'un traitement thermique, dans lequel le fluide infiltré subit une expansion de volume lors d'un changement de phase liquide-solide.

11. Procédé selon la revendication 10, **caractérisé en ce que** le fluide d'infiltration est l'eau, que l'on introduit par immersion, projection ou en phase gazeuse dans les pores de la couche d'isolation thermique et on la porte brièvement à congélation au moyen d'azote liquide ou de glace sèche, et en ce l'on effectue ensuite une élimination du fluide d'infiltration par un séchage usuel ou par un séchage sous vide.

12. Procédé selon la revendication 10 ou 11, **caractérisé en ce qu'**on limite la profondeur de pénétration du fluide d'infiltration, par des paramètres de processus appropriés, à la région de la couche externe de la couche d'isolation thermique, afin de minimiser les risques liés à un effet négatif du procédé sur l'adhérence de la couche d'isolation thermique (14).

13. Procédé selon la revendication 11, **caractérisé en ce que** l'on conduit la propagation spatiale de l'opération de congélation en évacuant la chaleur de façon dirigée à l'intérieur du composant, de telle manière que le front de solidification soit conduit depuis la face limite de la couche d'isolation thermique (14) en direction de la surface de la couche d'isolation thermique (14), au lieu de fermer la porosité par l'extérieur prématurément avant la fin de la solidification, et que les risques liés à un effet négatif du procédé sur l'adhérence de la couche d'isolation thermique (14) soient minimisés.
